# EUROPEAN PATENT APPLICATION

(11) **EP 4 492 203 A1**
(43) Date of publication of application: **15.01.2025**
(21) Application number: 23185004.1
(22) Date of filing: 12.07.2023
(51) Int. Cl.: G06F 3/01, G06T 13/40, H04L 51/02

(54) **DIALOGUE-SYSTEM, METHOD TO OPERATE SUCH A SYSTEM, A SOFTWARE SERVICE SYSTEM, COMPUTER SOFTWARE AND A COMPUTER READABLE MEDIUM**

(71) Applicant: Siemens Aktiengesellschaft, 80333 München (DE)
(72) Inventor: Johnson, Rebecca, 81739 München (DE)

(57) **Abstract**

The invention relates to a conversation system, e.g., an avatar-based-system, a method to operate the system, a software service system, computer software and a computer readable medium with an improved user experience. This invention, for the first time, uses the tool of eye tracking for digitalization. This invention introduces the means of eye tracking for human-machine communication, for example being the basis for creating an eye contact as nonverbal communication between human user and avatar for improving the workflow between human users and machines, generally taken place through a dialogue-system like it is subject of the present invention.

## Description

The invention relates to a conversation system, e.g., an avatar-based-system, a method to operate the system, a software service system, computer software and a computer readable medium with an improved user experience.

Dialogue-systems, like 3D avatars, are becoming increasingly popular online method for product and service providers to interact with their customers and/or users. This not only for daily business and/or consumer business with end customers but in industrial environments as well, especially regarding all supervising tasks within an automated production line, traffic control and/or regarding built up of autonomous factories.

3D avatars are a form of software agent that seems to be omnipresent. It may be referred to as chatbots, chatterbots, Artificial Conversational Entities, conversational agents, smart assistants, or other such terms.

The beginning and the end of successful digitalization of industry, traffic, energy, water and food distribution, travelling and production, just to name some examples, is a human-machine interaction. Only if that works smoothly and the user -being an end consumer or the one who is supervising a factory - feels comfortable while interacting with the machine, appropriate results will be achieved.

The critical point and interface of interaction between human user and machine are dialogue-systems. These work most of the time with bots, especially with avatars. Preferred are 3D-avatars that behave and look as much human-like as possible.

An avatar-based-dialogue-system is a system that serves as a steering tool, supervising and control tool. To handle that tool and to work with it the user depends on smooth conversation with the avatar. The 3D avatar should as less as possible be perceived as a robot.

An avatar-based-dialogue-system is a system that serves as a steering tool and/or mimics conversation, either by voice-, language- and/or text-based input, with an user so as to provide them with information and services and also receive information from the user.

Previously, machines, for example robots in industry, were steered by a web-based controller-tool and/or user may have carried out this interaction via an app, for example on a mobile device or a website. Meanwhile it is common use that these interactions of humans with the dialogue-systems, also in industrial environment, are performed by avatars, especially 3D avatars.

An avatar, chatbot and/or spoke robot ca be the user's online alter ego, in other words the digital representation of a human in a virtual setting. However, on the other side it may be the partner in communication and dialogue of the human in the virtual setting.

Big effort is made to render the robots or avatars as much human-like as possible. However, it has been found out that just up to a certain point these efforts are successful. Beyond a certain point of affinity, the so called "uncanny valley" the robots appear more humanlike, but humans' affinity descends into a feeling of strangeness, a sense of unease, and a tendency to be scared or freaked out.

The "uncanny valley" is a hypothesized relation between an object's degree of resemblance to a human being and the emotional response to the object. This is because there is a region in our brains that cannot comprehend creatures of characters that look almost human but not quite.

As already mentioned above, digitalization needs a smooth running of machine-human-interaction in order to become successful. The critical point is the emotional comfort of the human user of dialogue-systems with avatars etc.

It is object of the present invention to provide a dialogue-system for human-machine interaction that enables the user to be within his emotional comfort zone while working with the dialogue-system that uses avatars.

Accordingly, one subject of the present invention is a dialogue-system, the system comprising means configured to track the user's eye movement, means to generate data from the tracking, means to forward the data about the user's eye movement onto the processor of the dialogue-system and means to use the information to improve communication of the dialogue-system with the user.

According to one preferred embodiment of the invention the dialogue-system is using a spoke robot, a chatbot and/or an avatar. For ease of writing the term avatar is used meaning each embodiment thereof throughout this description and claims.

According to a preferred embodiment of the invention, the dialogue-system comprises means configured to track the user's eye movement, means to forward the data about the user's eye movement onto the device operating the avatar, the device being configured to receive this information and steer the avatar's eye movement depending on the user's eye movement in real time.

According to another preferred embodiment of the invention, the dialogue-system comprises means configured to track the user's eye movement, means to forward the data about the user's eye movement onto the device operating the avatar, the device being configured to receive this information and adapt the avatar's eye movement to the user's eye movement in real time.

According to one example of a preferred embodiment of the present invention the dialogue-system using avatars comprises a camera - like the usual laptop and/or smartphone camera, especially preferred of course the front camera, - which is configured and suitable to track the user's eye movement.

After tracking the eye movement and generating data therefrom these data are forwarded to the device of the dialogue-system which is running the avatar. This forwarding may be done with a intermediate storage of the date in a memory unit or directly.

The device operating the avatar is being configured to receive this data and adapt the avatar's eye movement to the user's eye movement in real time.

It is another subject of the present invention to provide a method to operate a dialogue-system, the method comprising the steps of
- Starting the dialogue-system
- Starting of the user's eye tracking by the means for tracking eye movement of the dialogue-system
- Generating data representing the eye movement of the user
- Forwarding these data concerning user's eye movement to the device of the dialogue system operating the avatar
- Receiving and processing of the data related to the eye movement of the user,
- Steering and/or adapting of the avatar's eye movement referring to the user's eye movement
- Starting of the conversation between the user and the dialogue-system.

According to one preferred embodiment of the invention, the method to operate a dialogue-system comprises the steps of
- Starting the dialogue-system
- Starting of the user's eye tracking by the camera of the dialogue-system
- Forwarding data concerning user's eye movement to the device of the dialogue system operating the avatar
- Adaption of the avatar's eye movement referring to the user's eye movement
- Starting of the conversation between the user and the dialogue-system.

A software service system comprising the dialogue-system, computer software and a computer readable medium to operate and execute computer software are further subjects of the present invention.

A "dialogue-system" as referred to in this description may be a conversation-system, a chatbot-system and/or a conversational agent "CA". This is a computer-based system intended to converse with a human. Dialogue-systems may employ one or more of text, speech, graphics, haptics, gestures, and/or other modes for communication on both the input and output channel. Modules of the dialogue-system are - for example but not being limited to
- input and output modules, processing modules, storage modules, access and connection to Internet of Things "IoT", computer with neuronal networks to apply artificial intelligence during the conversation, optional connections to different applications, smart phone applications and/or cloud-applications
- one or more processors being part of the above mentioned "processor-modules",
- the connection to a device being configured to work with and/or process artificial intelligence "AI",
- one or more automatic speech recognizer/generator
- one or more gesture recognizer/generator
- one or more handwriting recognizer/generator
- one or more natural language understanding unit/generating units
- one or more text-to-speech engine
- on or more talking heads like spoke robot or avatar.

It is the general concept of the present invention to make conversation between a dialogue-system and a human user smoother by creating an eye contact between the user and the avatar of the dialogue-system. The inventor found out that there is a big impact on eye contact when an avatar is communicating with a user. The user feels spontaneously more comfortable in the communication with the avatar that has eye contact with him, looks at him. Eye contact is known to be a form of nonverbal communication and can have large influence on emotional mood and/or social behavior. Mona Lisa is the most known example of how big impact an eye contact of a dead object - like the painting of the Mona Lisa - may have on humans.

While large investments are made into photorealism and motion capture setups to make the Avatars as humanlike as possible, this invention discloses - according to a preferred embodiment of the invention - the combination of the mature technology of eye tracking as used in cars to indicate sleepiness of the driver and the front camera of basically all devices being part of dialogue-systems like personal computers, laptops, tablets, smartphones and so on.

According to one preferred embodiment of the invention the means for tracking eye movement of the user employ the mature technique of eye tracking as used in back mirrors of cars.

According to one preferred embodiment of the invention the adaption of the avatar's eye movement is computer implemented done by calculation of the corresponding vector.

The system according to the present invention will use the front camera of the user's laptop or mobile phone and locate the pupils of the user's eye.
According to a preferred embodiment of the invention, the dialogue-system will further calculate the corresponding vector for the avatars eyes, animating them to move and follow the user's eyes, thus maintaining eye contact. The avatar is actually looking at you!

But this is only one way to use the adaption of the avatar's eye movement to the user's eye movement. The adaption according to the present invention does have a whole bunch of opportunities. While the avatar may have eye contact it also may look exactly on the other side or use the eyes to tell the user non-verbal something.

Besides, the information about the tracking of the user's eyes may be used by the dialogue-system to respond thereto in text, word, like, why do you always look at this spot of the screen? What is happening on that monitor you are staring at? The data with the information about the eye tracking of the user is in any case very helpful to improve the human-machine-communication and human-machine-interaction and thereby accelerating the digitalization.

Independent of the grammatical term usage, individuals with male, female or other gender identities are included within the term.

This invention, for the first time, uses the tool of eye tracking for digitalization. This invention introduces the means of eye tracking for human-machine communication, for example being the basis for creating an eye contact as non-verbal communication between human user and avatar for improving the workflow between human users and machines, generally taken place through a dialogue-system like it is subject of the present invention.

## Claims

1. Dialogue-system, the system comprising means configured to track the user's eye movement, means to generate data from the tracking, means to forward the data about the user's eye movement onto the processor of the dialogue-system and means to use the information to improve communication of the dialogue-system with the user.

2. Dialogue-system according to claim 1, the processor transferring the data about the user's eye movement to the device operating an avatar.

3. Dialogue-system according to claim 1 or 2, where the data about the user's eye movement is used to steer the avatar's eye movement depending on the user's eye movement in real time.

4. Dialogue-system according to claim 1 or 2, where the information about the user's eye movement is used to adapt the avatar's eye movement to the user's eye movement in real time.

5. Dialogue-system according to one of the preceding claims where a camera is employed as means configured to track the user's eye movement.

6. Dialogue-system according to one of the preceding claims, where the front camera of a laptop, a tablet, a smartphone and/or a personal computer is used as means for tracking eye movement of the user.

7. Dialogue-system according to one of the preceding claims, comprising a memory unit to store the data concerning the user's eye movement.

8. Method to operate a dialogue-system, the method comprising the steps of
- Starting the dialogue-system
- Starting of the user's eye tracking by the means for tracking eye movement of the dialogue-system
- Generating data representing the eye movement of the user
- Forwarding these data concerning user's eye movement to the device of the dialogue system operating the avatar
- Receiving and processing of the data related to the eye movement of the user,
- Steering and/or adapting of the avatar's eye movement referring to the user's eye movement
- Starting of the conversation between the user and the dialogue-system.

9. Method according to claim 8 further comprising the step of optionally intermediate storing the data generated from the means for tracking eye movement of the user.

10. Method according to claim 9, where the storage of the data takes place in a memory unit of the dialogue-system.

11. Method according to one of claims 8 to 10, further comprising the step of optionally transforming the data of the eye tracking into data that are processable, storable and/or readable by the processor of the dialogue-system.

12. A software service system comprising the dialogue-system according to one of claims 1 to 7.

13. Computer software which, when executed by a computer with a camera, causes the computer with camera to provide a dialogue-system according to one of claims 1 to 7.

14. Computer software which, when executed by a computer with a camera, causes the computer with camera to perform a method according to one of claims 8 to 11.

15. Computer readable medium comprising the computer software of claim 13 and/or 14.
